# EUROPÄISCHE PATENTSCHRIFT

(11) **EP 2 949 218 B1**
(45) Veröffentlichungstag und Bekanntmachung des Hinweises auf die Patenterteilung: **01.11.2017**
(21) Anmeldenummer: 14170229.0
(22) Anmeldetag: 28.05.2014
(51) Int. Cl.: A23C 3/037

(54) **Verfahren zur Herstellung keimarmer Milchprodukte**
Process for the production of low-germ milk products
Procédé pour la production de produits du lait pauvres en germes

(43) Veröffentlichungstag der Anmeldung: 02.12.2015
(73) Patentinhaber: DMK Deutsches Milchkontor GmbH, 27404 Zeven (DE)
(72) Erfinder: Döring, Sven-Rainer, 27404 Zeven (DE)
(74) Vertreter: Fabry, Bernd

(56) Entgegenhaltungen:
- DE-C1- 10 036 085
- US-A- 3 016 815
- JONATAN A DICKOW ET AL: "Effect of Lenient Steam Injection (LSI) heat treatment of bovine milk on the activities of some enzymes, the milk fat globule and pH", INTERNATIONAL JOURNAL OF DAIRY TECHNOLOGY, Bd. 65, Nr. 2, 28. Dezember 2011 (2011-12-28), Seiten 191-200, XP055145344, ISSN: 1364-727X, DOI: 10.1111/j.1471-0307.2011.00765.x

## Beschreibung

### GEBIET DER ERFINDUNG

Die Erfindung befindet sich auf dem Gebiet der Milchprodukte und betrifft ein verbessertes Verfahren zu deren Entkeimung.

### STAND DER TECHNIK

Pasteurisierung bezeichnet die kurzzeitige Erwärmung von flüssigen oder pastösen Lebensmitteln auf Temperaturen bis 100 °C zur Abtötung von Mikroorganismen. Sie dient dazu, unter anderem Milch, Frucht- und Gemüsesäfte und andere Flüssigkeiten haltbar zu machen. Durch die kurze Zeitdauer der Hitzeeinwirkung und die mäßige Temperatur werden der Nährwert, der Geschmack und die Konsistenz des Lebensmittels nur unbedeutend verändert und dennoch die meisten Lebensmittelverderber wie Milchsäurebakterien und Hefen sowie viele krankheitserregende Bakterien wie Salmonellen zuverlässig abgetötet. Hitzeresistente Bakteriensporen wie die von *Clostridium botulinum,* die Erreger der Paratuberkulose sowie Schimmelpilzsporen überleben diese Behandlung zumindest teilweise. Aus diesem Grund sollte der Mikroorganismengehalt der Rohware möglichst gering gehalten werden. Am bekanntesten ist die Pasteurisierung von Milch, die hierzu 15 bis 30 Sekunden auf 72 bis 75 °C erhitzt und danach sofort wieder abgekühlt wird. Pasteurisierte Milch bleibt ungeöffnet bei 6 bis 7 °C gelagert etwa 6 bis 10 Tage genießbar. In Deutschland und der EU ist nach der europäischen Milchhygiene-Richtlinie die Pasteurisierung für alle gehandelten Milchsorten außer Roh- und Vorzugsmilch gesetzlich vorgeschrieben.

Bei der Pasteurisierung von Milch werden üblicherweise Plattenwärmeaustauscher eingesetzt. Durch Verbrennungsprozesse entstehen jedoch Ablagerungen an denen bei Temperaturen von 30 bis 55 °C thermoresistente Keime schnell und gerne wachsen; das gleiche trifft für Toträume in den Austauschern zu. Die Keime können sich innerhalb von 20 min jeweils verdoppeln und so können leicht Populationen von 6 Mio. Keimen/ml entstehen. Abgesehen von dem hygienischen Mangel können die Keime beispielsweise in der Käseherstellung durch Gasbildung zu Fehlbildungen führen: ganze Laibe können dabei aufgehen wie Luftballons. Durch Abgabe von Enzymen kann es auch zu sensorischen Belastungen kommen.

Die übliche Pasteurisierung folgt folgenden Schema: Die Rohmilch wird im ersten Wärmeaustauscher 30 bis 45 Sekunden von 6 auf 55 °C erhitzt. Im Separator wird dann bei dieser Temperatur innerhalb von 5 bis 10 Sekunden der Rahm abgetrennt. Anschließend wird die Magermilch innerhalb von 15 bis 30 Sekunden auf 72 °C erhitzt und bei dieser Temperatur im zweiten Wärmeaustauscher pasteurisiert. Innerhalb von 45 bis 60 Sekunden wird die pasteurisierte Milch dann wieder bis auf 8 °C abgekühlt. In Summe verbleibt die Milch aber über einen vergleichsweise langen Zeitraum im kritischen Temperaturfenster von 35 bis 55 °C, in dem Keimwachstum stattfindet.

Durch die Pasteurisierung sind diese Keime nicht zu töten. Auch die Fließgeschwindigkeit in den Bauteilen ist begrenzt, so dass ein Ausspülen der Keime nicht möglich ist. Eine Alternative wäre eine Ultrahocherhitzung, dabei würden aber die Molkenproteine denaturieren, so dass dies auch nicht in Frage kommt.

Aus dem Stand der Technik sind Verfahren bekannt, bei denen ein Teil der Keime schon vor der Pasteurisierung durch Mikrofiltrationsverfahren entfernt werden und so den Eindruck erwecken, es würden besonders keimarme Produkte erhalten. So ist stellvertretend für eine ganze Anzahl ähnlicher Druckschriften aus der EP 1656030 B1 (PARMALAT) beispielsweise ein Verfahren bekannt, bei dem der Pasteurisierung eine Filtration über eine engporige Membran vorgeschaltet ist, bei der das Permeat weiterverarbeitet und das bakterienbelastete Retentat verworfen wird. Für das eingangs beschriebene Problem bedeutet dies indes keine Lösung, denn die geringe Keimzahl im Permeat ist immer noch so hoch, dass sie unter den Bedingungen, die während der Behandlung im Wärmeaustauscher herrschen, so stark anwachsen können, dass wieder eine erhebliche Keimbelastung die Folge ist.

Aus der US 2002 012732 A1 (LINDQUIST) ist ein Verfahren bekannt, bei der man eine Magermilch einer Filtration unterwirft und dabei eine Permeat und ein Retentat erhält. Während das Permeat einer Wärmebehandlung unterworfen wird, wird das Retentat ein weiteres Mal filtriert und das dabei erhaltene zweite Permeat dem ersten Permeat zugesetzt. Das Verfahren erweist sich in der Praxis jedoch als viel zu aufwendig.

International Journal of Dairy Technology, Vol. 56(2), p 191-200 (2012**)** beschreibt ein Verfahren zum Pasteurisieren von Milch, wobei (a) durch Einspritzung von Wasserdampf Milch auf eine Temperatur von 70 bis 150 °C erhitzt und pasteurisiert wird, und (b) durch Flashkühlung die pasteurisierte Milch augenblicklich abgekühlt wird. Vor der Durchführung des obigen Verfahren kann die Rohmilch einer Vorerwärmung unterworfen werden, wobei frische Rohmilch auf etwa 50 °C erhitzt wird.

US 3 016 815 A offenbart ein Verfahren zur Bearbeitung von Milch offenbart, bei dem (a) durch zweistufige Vorerwärmung die Rohmilch zunächst auf etwa 54.4 °C (130 °F) erhitzt wird, (b) durch Einspritzung von Wasserdampf die vorerwärmte Milch auf eine Temperatur von 71.6 °C (161 °F) erhitzt und pasteurisiert wird, und (c) während die pasteurisierte Milch durch ein Gefäß fließt, wird die Milch unter Vakuum abgekühlt.

Gegenstand der US 6,372,276 B1 (LINDQUIST) ist ein Verfahren zur Erzeugung einer sterilen Milch, bei der Rohmilch zunächst filtriert und das so erhaltene Permeat anschließend in mehreren Stufen hitzebehandelt wird. Bei dieser Verfahrensdurchführung beobachtet man jedoch ein häufiges Verstopfen der Membranen, was zu ständigen Unterbrechungen im kontinuierlichen Verfahrensablauf führt, zudem werden die Keimzahlen nicht ausreichend reduziert. Ganz im Gegenteil wird hier ein Durchwachsen der Membranen beobachtet, denn da keine Konkurrenzflora vorliegt, wächst die Keimzahl exponentiell an.

Die Aufgabe der vorliegenden Erfindung hat somit darin bestanden, ein alternatives Verfahren zur zuverlässigen Entkeimung von Milchprodukten, speziell von Voll- und Magermilchprodukten zur Verfügung zu stellen, das frei von den eingangs geschilderten Nachteilen ist.

### BESCHREIBUNG DER ERFINDUNG

Ein Gegenstand der Erfindung betrifft ein Verfahren zur Herstellung von keimarmen Magermilchprodukten, bei dem man
(b1) das zu entkeimende Milchprodukt einer ersten Wärmevorbehandlung in einem Wärmeaustauscher unterwirft und auf Temperaturen im Bereich von 25 bis 30 °C erwärmt,
(b2) das vorbehandelte Milchprodukt durch eine erste direkte Einspritzung von hocherhitztem Wasserdampf ("direct steam injection", DSI) auf Temperaturen von 50 bis 60 °C erhitzt,
(b3) den Rahm abtrennt,
(b4) das entrahmte Milchprodukt durch eine zweite direkte Einspritzung von hocherhitztem Wasserdampf auf Temperaturen von 50 bis 75 °C erhitzt und dabei pasteurisiert, und
(b5) das pasteurisierte Produkt durch Flashkühlung abkühlt.

Das Verfahren kann kontinuierlich oder batchweise betrieben werden.

Grundsätzlich ist das Verfahren jedoch auch für alle übrigen Milchprodukte geeignet, die eine Pasteurisierung benötigen.

Überraschenderweise wurde gefunden, dass sich durch die Kombination aus Direct Steam Injection und Flashkühlung das Problem der langen Verweilzeit im für das Keimwachstum vorteilhaften Temperaturbereich zwischen 30 und 55 °C und insbesondere 35 bis 50 °C deutlich reduzieren lässt. Während übliche Pasteurisierungsverfahren eine Zeit zwischen 1 und 2 Minuten erfordern, lässt sich diese Zeitspanne gemäß vorliegender Erfindung um den Faktor 2 bis 4 verkürzen. Auf diese Weise kann die Keimbelastung von Milchprodukten deutlich reduziert werden.

### VORERWÄRMUNG

In einem ersten Schritt, wird die Rohmilch, die üblicherweise eine Temperatur zwischen 5 und 10 °C besitzt, einer Vorerwärmung unterworfen. Dies kann in üblichen Plattenwärmeaustauschern erfolgen, wobei eine Erwärmung innerhalb von etwa 10 bis etwa 30 Sekunden auf etwa 25 °C stattfindet.

### DIRECT STEAM INJECTION (DSI)

Der erste essentielle Schritt des erfindungsgemäßen Verfahrens besteht darin, den kritischen Aufheizvorgang, d.h. das langsame Durchlaufen eines Temperaturbereiches, in dem mesophile und thermophile Sporen optimale Wachstumsbedingungen vorfinden, durch eine blitzartige Erwärmung zu verkürzen. Dies wird durch die direkte Einspritzung von heißem oder sogar überhitztem Wasserdampf erreicht, der eine Temperatur von 100 bis 250 °C aufweisen kann. Üblicherweise erfolgt dies mit Hilfe von Düsen, die entweder direkt in das Produkt eintauchen oder in einer Ableitung des Wärmeaustauschers eingebaut sind.

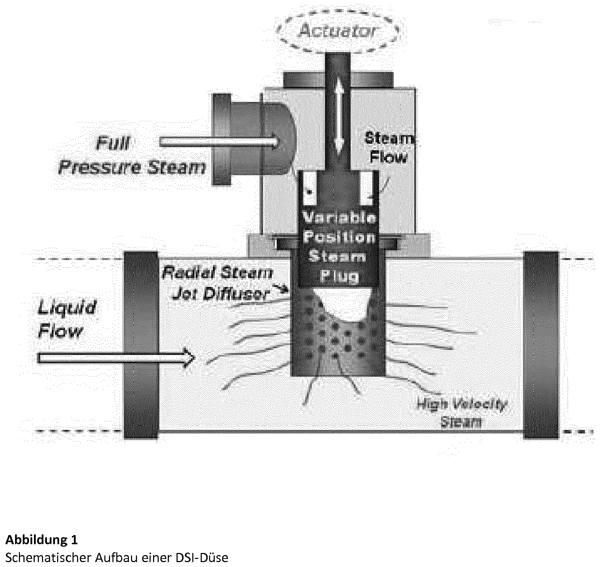

**Abbildung 1** erläutert das Prinzip der DSI: Ein unter Druck stehender hocherhitzter Wasserdampfstrahl wird in eine Düsenkammer geleitet und entspannt sich dann durch ein perforiertes Rohr ("Radial Steam Jet Diffuser") in das zu erhitzende flüssige Produkt. Der Hochdruckstrom erzeugt ein sich mit hoher Geschwindigkeit ausbreitendes radiales Wärmeaustauschfeld, wodurch eine gleichmäßige Erhitzung des Produktes in sehr kurzen Zeiten erreicht wird.

Wie eingangs erläutert, besteht das Ziel darin, das Milchprodukt in sehr kurzer Zeit, vorzugsweise 1 bis etwa 5 Sekunden und insbesondere 1 bis 2 Sekunden auf eine exakte Temperatur einzustellen. Dazu ist es erforderlich, eine möglichst präzise Menge an Dampf mit hoher Geschwindigkeit in das Produkt einzuleiten. Erfolgt die Kontrolle der Dampfmenge über ein Druckminderventil, fällt die Geschwindigkeit des Dampfes in der Regel unter die Schallgeschwindigkeit, was dazu führt, dass sich das Produkt nicht schnell genug erhitzt. Um dies zu verhindern wird der Dampf im Sinne des erfindungsgemäßen Verfahrens vorzugsweise unter so-genannten "choke-flow" Bedingungen eingespeist, weil dies erlaubt, Dampf auch mit Ultraschallgeschwindigkeit direkt in das zu erhitzende Produkt einzuleiten. Hierunter versteht man das Phänomen, die Dampfgeschwindigkeit zu steigern, indem man eine Druckdifferenz mit Hilfe einer speziellen Düse erzeugt, wie sie ebenfalls in **Abbildung 1** schematisch wiedergegeben ist. Mit Hilfe eines pneumatisch betriebenen Antriebs ("Actuator") wird ein Stempel ("Variable Position Steam Plug") ähnlich wie ein Kolben in einem Zylinder auf und nieder bewegt und dadurch die Dampfmenge genau gesteuert. Entsprechende Bauteile sind beispielsweise von der Firma ProSonics im Handel erhältlich.

Es ist grundsätzlich möglich, direkt von der kalten Rohmilch auszugehen. Allerdings ist die Temperaturführung umso präziser, je geringer die Temperaturunterschiede sind. Wird die Rohmilch im ersten Schritt wie angegeben auf nicht mehr als 25 °C erhitzt, befindet sie sich unter der Temperatur, die für das Keimwachstum günstig ist, so dass dies also nicht von Nachteil ist Ein weiterer Aspekt besteht darin, dass der Wärmeübertrag bedingt durch die regenerativen Bereiche eines Platten- oder Röhrenwärmeaustauschers wesentlich effizienter wird.

Die Beschreibung der DSI trifft jeweils für die Schritte (b2) und (b4) zu.

### ENTRAHMUNG

Die Entrahmung der Milch findet dann statt, wenn Magermilch hergestellt werden soll. Dazu hat es sich als vorteilhaft erwiesen, den Rahm (etwa 4 Gew.-% der Gesamtmasse an Rohmilch) bei nicht zu hohen Temperaturen abzutrennen und dabei vorzugsweise 60 °C nicht zu überschreiten, weil es ansonsten zu Qualitätsverlusten kommt. Dieser Prozessschritt kann in Standard-Separatoren durchgeführt werden, die aus dem Stand der Technik hinreichend bekannt sind. In der Milchindustrie sehr verbreitet sind Separatoren der Firma GEA Westfalia Separator GmbH (http://www.westfalia-separator.com/de/anwendungen/molkereitechnik/milch-molke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

### FLASHKÜHLUNG

Ein zweiter essentieller Schritt des erfindungsgemäßen Verfahrens besteht darin, auch beim Abkühlen den für das Keimwachstum kritischen Temperaturbereich möglichst schnell zu durchlaufen. Hierzu hat sich eine Flashkühlung als besonders wirksam erwiesen

Unter dem Begriff Flashkühlung versteht man ein Verfahren, bei dem das heiße flüssige Produkt unter turbulenten Strömungsbedingungen in einen unter verminderten Druck stehenden Reaktor "eingeflasht" wird, so dass der Siedepunkt des Wassers unter 30 °C abgesenkt wird. Zur Unterstützung kann der Mantel des Flashreaktors zusätzlich noch gekühlt werden. Eine entsprechende Verfahrensbeschreibung bezogen auf die Abkühlung einer Polymerzubereitung wird beispielsweise in der EP 1116728 B1 (WOLFF CELLULOSICS) beschrieben.

Die Abkühlung der pasteurisierten Magermilch, wie sie im Schritt (b5) vorgesehen ist, benötigt etwa 1 bis 5 Sekunden, wobei die Endtemperatur üblicherweise bei etwa 25 bis etwa 30 °C liegt.

### NACHKÜHLUNG

Wird der Mantel des Flashreaktors zusätzlich gekühlt, kann die Austrittstemperatur der pasteurisierten Milch unter 10 °C liegen. In diesem Fall ist eine weitere Kühlstufe nicht erforderlich. Verlässt die Milch den Reaktor wie typisch mit etwa 25 °C, dann schließt sich jedoch vorzugsweise eine weitere Abkühlung auf 5 bis 10 °C an, die wieder in einem Plattenwärmeaustauscher erfolgen kann, weil unter diesen Bedingungen kein Wachstum von unerwünschten Keimen beobachtet wird.

### BEISPIELE

### Beispiel 1

### Herstellung von pasteurisierter Magermilch

Rohmilch wurde auf 6 °C abgekühlt und mit Hilfe eines Plattenwärmeaustauschers innerhalb von 15 Sekunden auf 25 °C erwärmt. Die vorgewärmte Milch wurde durch eine erste direkte Heißdampfinjektion innerhalb von 1 Sekunde auf 55 °C erhitzt und dann in einen Separator geleitet, in dem der Rahm abgetrennt wurde. Die entrahmte Milch wurde durch eine zweite direkte Heißdampfinjektion innerhalb von 2 Sekunden auf 72 °C erhitzt und pasteurisiert. Anschließend wurde die pasteurisierte Milch mit turbulenter Strömung in einen Reaktor eingesprüht und der Druck dabei so weit herabgesetzt, dass sich das Produkt innerhalb von 5 Sekunden bis auf 25 °C abkühlte. Das austretende Produkt wurde anschließend in einem Plattenwärmeaustauscher bis auf 8 °C abgekühlt. Die resultierende Magermilch war praktisch frei von mesophilen und thermophilen Sporen.

### Vergleichsbeispiel V1

### Herstellung von pasteurisierter Magermilch

Rohmilch wurde auf 6 °C abgekühlt und mit Hilfe eines Plattenwärmeaustauschers innerhalb von 40 Sekunden auf 55 °C erwärmt. Die vorgewärmte Milch wurde in einen Separator geleitet, in dem der Rahm abgetrennt wurde. Die so erhaltene Magermilch wurde in einem zweiten Plattenwärmeaustauscher innerhalb von 15 Sekunden bis auf 72 °C erhitzt und pasteurisiert. Anschließend wurde die pasteurisierte Milch in einem dritten Wärmeaustauscher bis auf 8 °C abgekühlt. abgekühlt. Die resultierende Magermilch befand sich zwar innerhalb der EU-Spezifikation, wies jedoch pro ml rund 500 mesophile und thermophile Sporen auf.

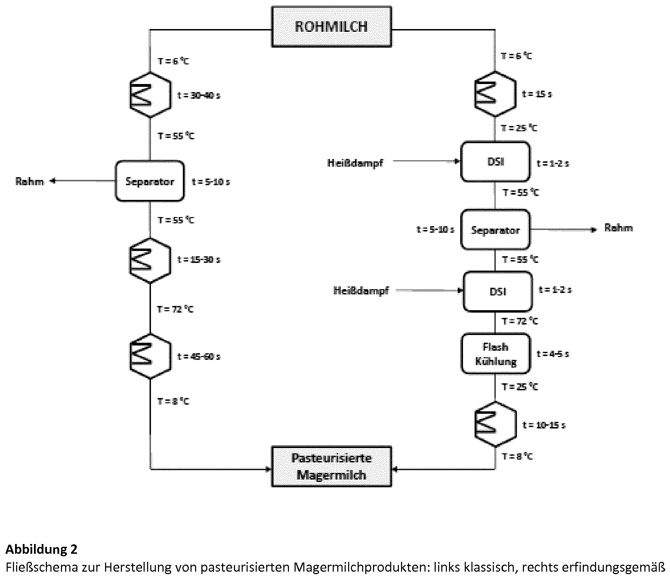

Die beiden Verfahren werden in der nachfolgenden **Abbildung 2** noch einmal an Hand eines Ablaufdiagramms einander gegenübergestellt.

## Patentansprüche

1. Verfahren zur Herstellung von keimarmen Milchprodukten, bei dem man
(b1) das zu entkeimende Milchprodukt einer ersten Wärmevorbehandlung in einem Wärmeaustauscher unterwirft und auf Temperaturen im Bereich von 25 bis 30 °C erwärmt,
(b2) das vorbehandelte Milchprodukt durch eine erste direkte Einspritzung von hocherhitztem Wasserdampf auf Temperaturen von 50 bis 60 °C erhitzt,
(b3) den Rahm abtrennt,
(b4) das entrahmte Milchprodukt durch eine zweite direkte Einspritzung von hocherhitztem Wasserdampf auf Temperaturen von 50 bis 75 °C erhitzt und dabei pasteurisiert, und
(b5) das pasteurisierte Produkt durch Flashkühlung abkühlt.

2. Verfahren nach Anspruch 1, **dadurch gekennzeichnet, dass** es kontinuierlich durchgeführt wird.

3. Verfahren nach Anspruch 1, **dadurch gekennzeichnet, dass** es batchweise durchgeführt wird

4. Verfahren nach Anspruch 1, **dadurch gekennzeichnet, dass** man die Milchprodukte in einem Wärmetauscher (Schritt b1) über einen Zeitraum von 10 bis 30 Sekunden erwärmt.

5. Verfahren nach Anspruch 1, **dadurch gekennzeichnet, dass** man in die wärmevorbehandelten Produkte hocherhitzten Wasserdampf einspritzt (Schritte b2, b4), der eine Temperatur im Bereich von 100 bis 250 °C aufweist.

6. Verfahren nach Anspruch 1, **dadurch gekennzeichnet, dass** man in die wärmevorbehandelten Produkte hocherhitzten Wasserdampf (Schritte b2, b4) über einen Zeitraum von 1 bis 5 Sekunden einspritzt.

7. Verfahren nach Anspruch 1, **dadurch gekennzeichnet, dass** man die pasteurisierten Produkte (Schritt b5) über einen Zeitraum von 1 bis 5 Sekunden abkühlt.

8. Verfahren nach Anspruch 1, **dadurch gekennzeichnet, dass** man die pasteurisierten Produkte (Schritt b5) auf eine Temperatur von 25 bis 30 °C abkühlt.

9. Verfahren nach Anspruch 1, **dadurch gekennzeichnet, dass** man die vorgekühlten Produkte abschließend in einem Wärmeaustauscher auf eine Temperatur von 5 bis 10 °C abkühlt.

## Claims

1. Process for production of low microbial count milk products, in which
(b1) the dairy product to be reduced in microbial count is subjected to a first heat pretreatment in a heat exchanger and is heated to temperatures to a temperature in the range from 25 to 30 °C,
(b2) the pretreated product is heated to a temperature of 50 to 60 °C by a first direct injection of superheated steam,
(b3) the cream is separated off,
(b4) the skimmed milk product is heated to temperatures of 50 ° to 75 ° C. by means of a second direct injection of superheated steam and pasteurized, and
(b5) the pasteurized product is cooled by flash cooling.

2. Process according to claim 1, **characterized in that** it is carried out continuously.

3. Process according to claim 1, **characterized in that** it is carried out batch-wise.

4. Process according to claim 1, **characterized in that** the dairy products are heated in a heat exchanger (step b1) for a period of 10 to 30 seconds.

5. Process according to claim 1, **characterized in that** superheated steam is injected into the heat-pretreated products (steps b2, b4) which superheated steam has a temperature in the range from 100 250 °C.

6. Process according to claim 1, **characterized in that** superheated steam (steps b2, b4) is injected into the heat-treated products over a period of 1 to 5 seconds.

7. Process according to claim 1, **characterized in that** the pasteurized products (step b5) are cooled over a period of 1 to 5 seconds.

8. Process according to claim 1, **characterized in that** the pasteurized products (step b5) are cooled to a temperature of 25 to 30 °C.

9. Process according to claim 1, **characterized in that** the precooled products are finally cooled in a heat exchanger to a temperature of 5 to 10 °C.

## Revendications

1. Procédé de fabrication de produits laitiers à faible teneur en germes, selon lequel
(b1) le produit laitier à dégermer est soumis à un premier prétraitement thermique dans un échangeur de chaleur et porté à des températures dans la plage allant de 25 à 30 °C,
(b2) le produit laitier prétraité est porté à des températures de 50 à 60 °C par une première injection directe de vapeur d'eau hautement chauffée,
(b3) la crème est séparée,
(b4) le produit laitier écrémé est porté à des températures de 50 à 75 °C par une deuxième injection directe de vapeur d'eau hautement chauffée, et ainsi pasteurisé, et
(b5) le produit pasteurisé est refroidi par refroidissement rapide.

2. Procédé selon la revendication 1, **caractérisé en ce qu'**il est réalisé de manière continue.

3. Procédé selon la revendication 1, **caractérisé en ce qu'**il est réalisé de manière discontinue.

4. Procédé selon la revendication 1, **caractérisé en ce que** les produits laitiers sont chauffés dans un échangeur de chaleur (étape b1) pendant une durée de 10 à 30 secondes.

5. Procédé selon la revendication 1, **caractérisé en ce que** de la vapeur d'eau hautement chauffée qui présente une température dans la plage allant de 100 à 250 °C est injectée (étapes b2, b4) dans les produits prétraités thermiquement.

6. Procédé selon la revendication 1, **caractérisé en ce que** de la vapeur d'eau hautement chauffée est injectée (étapes b2, b4) dans les produits prétraités thermiquement pendant une durée de 1 à 5 secondes.

7. Procédé selon la revendication 1, **caractérisé en ce que** les produits pasteurisés (étape b5) sont refroidis pendant une durée de 1 à 5 secondes.

8. Procédé selon la revendication 1, **caractérisé en ce que** les produits pasteurisés (étape b5) sont refroidis à une température de 25 à 30 °C.

9. Procédé selon la revendication 1, **caractérisé en ce que** les produits pré-refroidis sont enfin refroidis à une température de 5 à 10 °C dans un échangeur de chaleur.
